# EUROPEAN PATENT APPLICATION

(11) **EP 2 050 630 A1**
(43) Date of publication of application: **22.04.2009**
(21) Application number: 07743083.3
(22) Date of filing: 10.05.2007
(51) Int. Cl.: B60R 21/26, B60N 2/42, B60R 21/20

(54) **SEAT-MOUNTED OCCUPANT RESTRAINT APPARATUS**

(30) Priority: 07.08.2006 JP 2006214941
(71) Applicant: Takata Corporation, Tokyo 106-8510 (JP)
(72) Inventor: SUGIMOTO, Shinichi, Tokyo 106-8510 (JP); TAKEDOMI, Akifumi, Tokyo 106-8510 (JP)
(74) Representative: Vossius & Partner
(86) International application number: PCT/JP2007/059648
(87) International publication number: WO 2008/018218

(57) **Abstract**

In order to reduce an installation space and to expand the degree of freedom in installation space, a seat mounted vehicle occupant restraint device includes a seat backrest 1B, a pair of airbags 11a and 11b respectively provided at positions within the seat backrest 1B such that during inflating, the airbags develop toward the sides of an occupant 2, one inflator 13 commonly supplying gas to the pair of airbags 11a and 11b, and an introduction pipe line 12 introducing the gas from the inflator 13 to the pair of airbags 11a and 11b.

## Description

### Technical Field

The present invention relates to a seat mounted vehicle occupant restraint device equipped for a vehicle, such as an automobile, and having an airbag therewithin.

### Background Art

Various airbag devices, such as a driver airbag device, in which an airbag is inflated and developed from the rotational center of a steering wheel toward a driver in a driver's seat, and a passenger airbag device, in which the airbag is inflated and developed from an instrument panel toward a passenger seat, have been used for restraining an occupant body during a vehicle collision.

When a large external force is applied to an automobile at a severe accident, such as vehicle rolling due to a collision, a possible impact may be applied on sides of the lower back and chest of an occupant due to the collision impact, so that a side airbag has been recently proposed already against such a case (see Patent Document 1, for example).

[Patent Document 1] Japanese Unexamined Patent Application Publication No. 2005-231504

### Disclosure of Invention

### Problems to be Solved by the Invention

In the conventional technique mentioned above, a basic configuration is disclosed in that a side airbag and pressure fluid supplying means (inflator) are provided on the side of the lower back of an occupant outside a vehicle seat for supplying pressure fluid (gas) to the side airbag, so that at an emergency, the pressure fluid is supplied from the pressure fluid supplying means to the airbag so as to inflate and develop the airbag toward the side or an upper part of an occupant.

In such an airbag device, when the airbags are provided on bilateral sides of a seat, the pressure fluid supplying means must be also provided on the bilateral sides of the seat, requiring two of the pressure fluid supplying means. Hence, the installation space for the airbag device is increased, so that a problem has arisen in that the degree of freedom in installation space is decreased due to the difficulty in ensuring the space.

It is an object of the present invention to provide a seat mounted vehicle occupant restraint device capable of decreasing an installation space and increasing the degree of freedom in installation space when airbags are provided on bilateral sides of a seat.

### Means for Solving the Problems

In order to achieve the object described above, a seat mounted vehicle occupant restraint device according to a first invention of the present invention includes a seat backrest; a plurality of airbags respectively provided at positions within the seat backrest such that during inflating, the airbags develop toward a substantial peripheral region of an occupant at least including the sides of the occupant; and pressure fluid supplying means configured to commonly supply pressure fluid to the plurality of airbags.

In the first invention of this application, at an emergency, the pressure fluid is commonly supplied to the plurality of airbags by the pressure fluid supplying means. As a result, the airbags start inflating within the backrest, and during the inflating, cleavage parts of the backrest are pushed and cleaved. Then, the plurality of airbags bulge outside the backrest through the opened cleavage parts so as to develop toward the sides of an occupant, respectively.

According to the present invention, the pressure fluid is commonly supplied to the plurality of airbags by the pressure fluid supplying means in such a manner, so that the one pressure fluid supplying means can supply the pressure fluid to the plurality of airbags. Thereby, in comparison with a configuration in that a plurality of individual pressure fluid supplying means are provided for the plurality of airbags, the installation space can be omitted for additional pressure fluid supplying means, so that the installation space can be reduced for the airbag device by that space. As a result, the installation space for the airbag device can be easily ensured and the degree of freedom in installation space can be expanded.

According to a second invention in the first invention, the pressure fluid supplying means includes one inflator and an introduction pipe line configured to introduce the pressure fluid from the inflator to the plurality of airbags.

Thereby, the pressure fluid can be introduced to the plurality of airbags from the one inflator provided in the introduction pipe line, so that the installing space can be omitted for an additional inflator, reducing the installing space by that space.

According to a third invention in the second invention, the introduction pipe line is configured in a substantially U-shape.

Since the introduction pipe line is substantially U-shaped in such a manner, the pipe line can be routed by folding back the line, thereby expanding the degree of freedom in installation space of the introduction pipe line.

According to a fourth invention in the first invention, the pressure fluid supplying means is a pipe line type of inflator configured to supply the pressure fluid to the plurality of airbags.

Thereby, the pipe line itself forms an inflator, so that it is not necessary to prepare the installation space for the inflator in addition to that for the introduction pipe line, further reducing the installation space. The pressure fluid can also be supplied simultaneously to the plurality of airbags.

According to a fifth invention in the fourth invention, the pipe line type of inflator is substantially U-shaped.

Whereby, by providing the substantially U-shaped pipe line type of inflator within the backrest in a substantially bilateral symmetrical arrangement, the pressure fluid can be simultaneously supplied to the airbags provided on bilateral sides of the seat.

According to a sixth invention in the any one of the first to fifty inventions, the introduction pipe line or the pipe line type of inflator constitutes at least part of a strength support member configured to support a load from an occupant.

Thereby, the introduction pipe line or the pipe line type of inflator can also serve as the strength support member of the backrest, so that in comparison with a case where the strength support member is independently provided in addition to the introduction pipe line or the pipe line type of inflator, the installation space can be more easily ensured for the airbag device within the backrest and the degree of freedom can be expanded as well. Advantages

According to the present invention, when airbags are provided on bilateral sides of a vehicle seat, the installation space can be reduced and the degree of freedom in installation space can be expanded.

### Brief Description of Drawings

[Fig. 1] Fig. 1 is a perspective view of a seat mounted vehicle occupant restraint device according to an embodiment.
[Fig. 2] Fig. 2 is a front view of a seat having an airbag device accommodated within its seat back rest.
[Fig. 3] Fig. 3 is a side view showing a state of an occupant sitting on the seat.
[Fig. 4] Fig. 4 is a front view of the airbag device with an introduction pipe line having one inflator.
[Fig. 5] Fig. 5 is a sectional view at the line A-A of Fig. 4.
[Fig. 6] Fig. 6 is an exploded perspective view showing a structure mounting a side airbag on an attachment part on the right of the introduction pipe line.
[Fig. 7] Fig. 7 is a plan view of the airbag 11 showing the fully-inflated and developed whole structure.
[Fig. 8] Fig. 8 is a partial enlarged plan view showing the attachment relationship to the introduction pipe line 12.
[Fig. 9] Fig. 9 is a perspective view of a seat mounted vehicle occupant restraint device modified from the airbag device according to the present invention.
[Fig. 10] Fig. 10 is a front view of an airbag device with a pipe line type of inflator. Reference Numerals

- 1: seat
- 1B: backrest
- 1C: headrest
- 1D: skin cloth
- 2: occupant
- 2A: chest
- 2B: waist
- 10, 30: airbag device
- 11: airbag
- 11a, 11b: side airbag
- 12, 32: introduction pipe line (strength support member)
- 13: inflator
- 15: gas supply hole
- 20: gas inlet
- 35: base cloth
- H: suture
- M: airbag attachment part
- R1: upper expansion chamber
- R2: middle expansion chamber
- R3: lower expansion chamber
- M: airbag attachment part

### Best Modes for Carrying Out the Invention

An embodiment of the present invention will be described below with reference to the drawings.

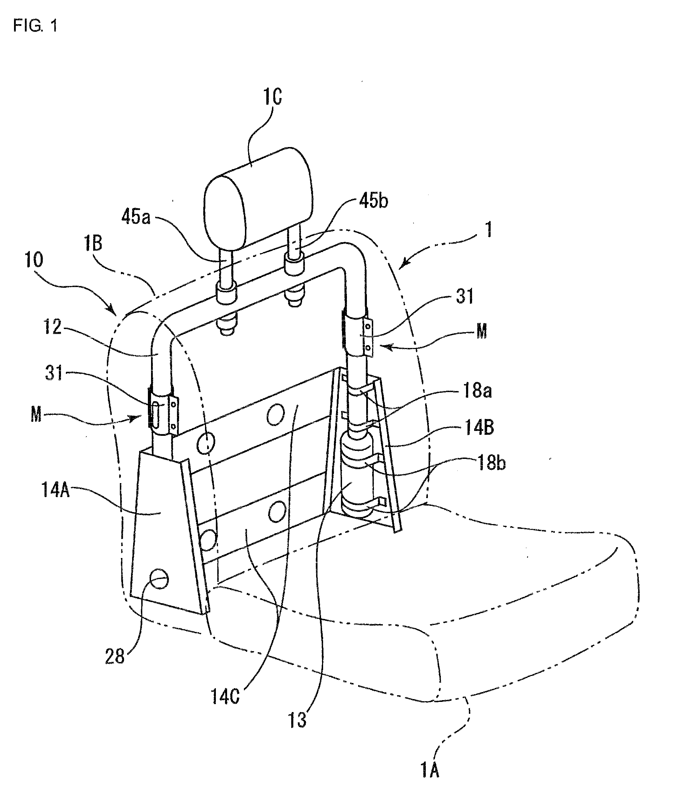

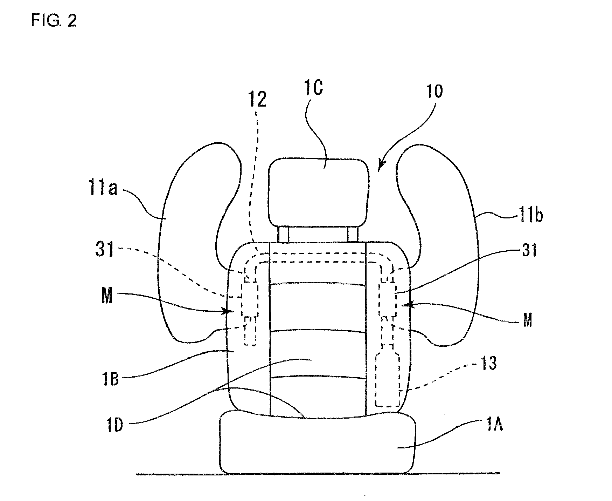

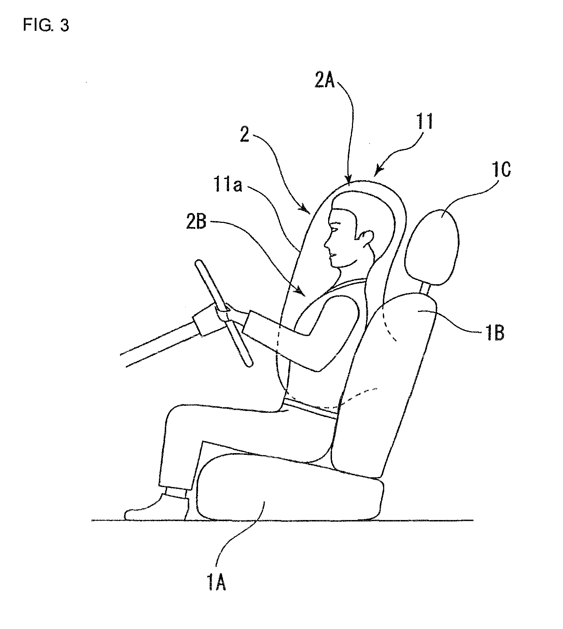

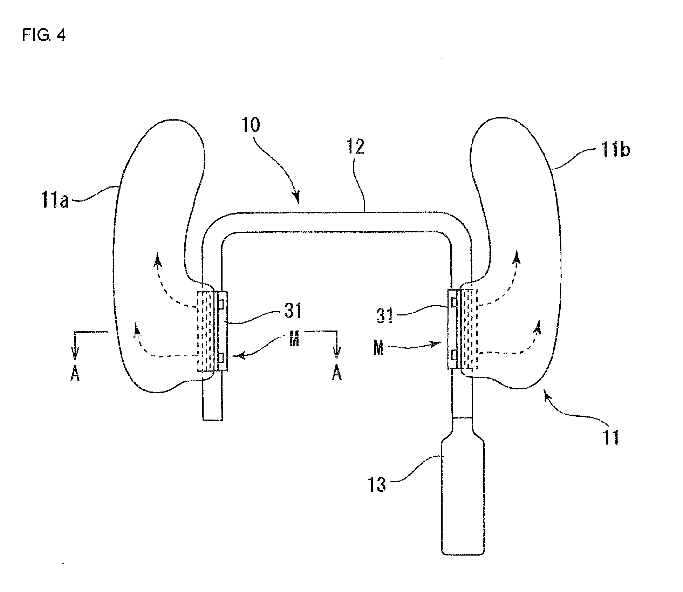

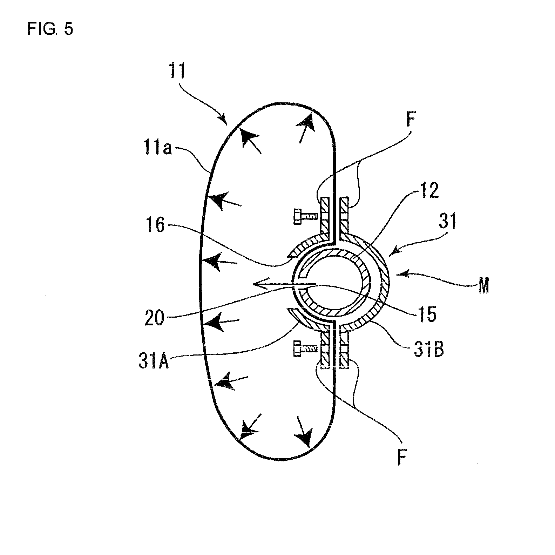

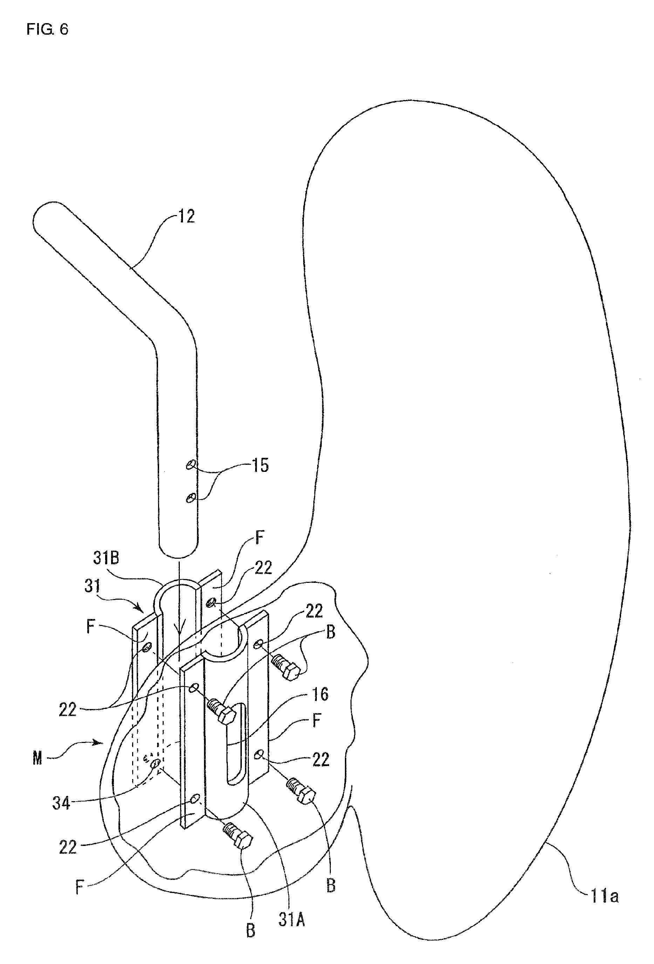

Fig. 1 is a perspective view of a seat mounted vehicle occupant restraint device according to the embodiment; Fig. 2 is a front view of a seat having an airbag device accommodated within its seat back rest; Fig. 3 is a side view showing a state of an occupant sitting on the seat; Fig. 4 is a front view of the airbag device with an introduction pipe line having one inflator; Fig. 5 is a sectional view at the line A-A of Fig. 4; and Fig. 6 is an exploded perspective view showing a structure mounting a side airbag on an attachment part on the right (right in a vehicle width direction) of the introduction pipe line.

In Fig. 1, the airbag is omitted for avoiding graphic complexity. In addition, the front direction represents the direction below, in which an occupant sitting on a seat watches the front (in front of a vehicle, for example), while the rear direction denotes the reverse to the front direction.

In Fig. 1, a seat mounted vehicle occupant restraint device according to the embodiment includes a seat 1, in which an occupant 2 shown in Fig. 3 is sitting, and an airbag device 10 provided in the seat 1.

The seat 1 includes a seating part 1A and a backrest 1B protruding upwardly from the seating part 1A. On the top of the backrest 1B, a headrest 1C is attached to the upper piping of an introduction pipe line 12 (will be described later) via support parts 45a and 45b.

The seat 1 is provided with the airbag device 10 arranged within the backrest 1B for restraining the head 2A and the chest 2B (see Fig. 3) of the occupant 2 at vehicle rolling or a side-on collision due to an accident.

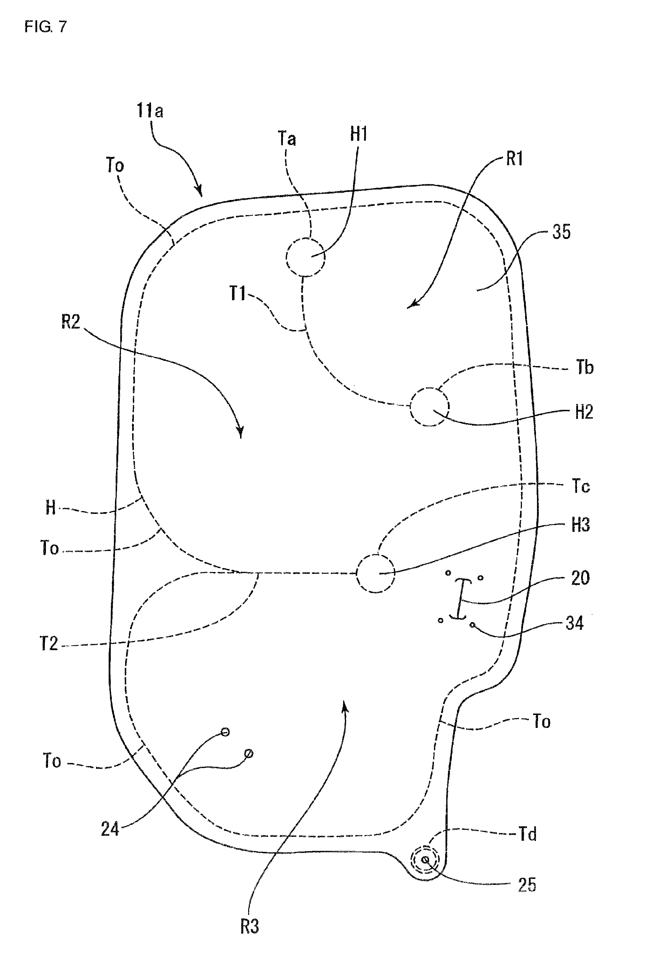

The airbag device 10 includes an airbag 11 composed of a plurality (a pair) of side airbags 11a and 11b, each being formed of a bag (see Fig. 7) made by stitching two base cloths 35 flatly overlapped with each other, provided on both sides within the backrest of the seat 1, respectively, such that during inflating, the side airbags 11a and 11b develop toward the sides of the head 2A and the chest 2B of the occupant 2, respectively; a retainer (not shown) accommodating the folded airbag 11 therein, the retainer having an upper guide member (developing-direction guide member) and a lower guide member (developing-direction guide member) (which are not shown) integrally attached to an airbag attachment part M of the introduction pipe line, which will be described later; and gas supplying means for commonly supplying gas to the plurality (the pair) of airbags 11. The gas supplying means includes one inflator 13 (see Figs. 1 and 2) and an introduction pipe line 12 arranged at one end of the inflator 13 for introducing gas from the inflator 13 commonly to the individual side airbags 11a and 11b.

The seat 1 is provided with the frame-like introduction pipe line 12 arranged therewithin and composed of side plates 14A and 14B and cross members 14C (see Fig. 1) to have a seat skeleton bent in an inverted-U shape (details will be described later). The introduction pipe line 12 is also functioning as a strength support member for supporting the load from the occupant 2. The seating part 1A and the backrest 1B of the seat 1 are wholly covered with skin cloths 1D, respectively. Among them, the skin cloth 1D covering the backrest 1B is provided with tear lines (cleavage parts) (not shown) formed on both side surfaces, respectively, which are easily cleavable more than other parts owing to perforated lines.

Although not shown, in an automobile having the airbag device 10 mounted thereon, various sensors are provided for detecting the occurrence of a collision (or foreseeing the occurrence) when the automobile makes the collision (including side-on collision). Then, on the basis of the detected signal from the sensors, an inflator control circuit (not shown) activates an initiator (not shown) of the inflator 13 arranged at one end of the introduction pipe line 12.

In Fig. 2, on normal conditions, the both side airbags 11a and 11b are accommodated within the retainer (not shown) in a folded state. On the other hand, when the automobile makes the collision/rolling, the sensors detect this collision, so that an activation signal is inputted to the initiator of the inflator 13 from the inflator control circuit so as to activate the initiator. Thereby, as shown in Figs. 2 to 4, the development parts of the airbags 11 are inflated so as to develop toward between the internal side of the automobile and one side of the occupant 2 and between the other side of the occupant 2 and the one side of an occupant sitting adjacent to the occupant 2, respectively. At this time, the airbags 11 cleave the tear lines (not shown) formed on the skin cloth 1D on both the sides of the backrest 1B, and then, they bulge outside so as to develop toward both the sides of the occupant 2, respectively.

The initiator (not shown) of the inflator 13 and the inflator control circuit (not shown) are connected together with a cable (not shown), and the ignition of the inflator 13 is controlled via the cable.

In Figs. 1 and 2, the introduction pipe line 12 is a metallic pipe bent in an inverted U-shape, for example. Both the lower ends of the introduction pipe line 12 are attached to a pair of the side plates 14A and 14B provided within the backrest 1B of the seat 1 on its both sides in the vehicle width direction, respectively, each lower end portion of the introduction pipe line 12 being fastened at upper and lower positions with metallic clamp bands 18a provided inside the both side plates 14A and 14B. The inflator 13 arranged at one lower end of the introduction pipe line 12 (at the left lower end in the vehicle width direction according to the embodiment, on the right in Figs. 1, 2, and 4) is also attached to the inside of one side plate 14B at upper and lower positions with metallic clamp bands 18b.

Between the side plates 14A and 14B, the cross members 14C and 14c are connected to extend substantially along the vehicle width direction. Both the side plates 14A and 14B are provided within the backrest 1B of the seat 1.

As shown in Figs. 5 and 6, on both sides of the U-shaped structure of the introduction pipe line 12, airbag attachment parts M are provided for attaching the side airbags 11a and 11b at a predetermined height position. The airbag attachment parts M are provided with gas supply holes 15, respectively.

To these gas supply holes 15, the side airbags 11a and 11b are attached with attachment members 31 (below mentioned) in a state of the gas supply holes 15 corresponded to gas inlets 20 (below mentioned) of the side airbags 11a and 11b, respectively. The pressure gas from the inflator 13 is to be introduced from the gas supply holes 15 to the side airbags 11a and 11b via the gas inlets 20, respectively.

The respective attachment members 31, as shown in Figs. 5 and 6, are composed of a pair of attachment plates 31A and 31B for attaching the side airbags 11a and 11b to the introduction pipe line 12. The attachment plates 31A and 31B are semicircular fitting concave parts for clamping the introduction pipe line 12 therebetween. On both sides of the concave part, flanges F are provided with four holes 22. The one attachment plate 31A is provided with a gas supply elongated hole 16 formed in the center of the fitting concave part for supplying gas.

Then, when attaching the one side airbag 11a to the one side of the introduction pipe line 12, first, the one attachment plate 31A is inserted into the side airbag 11a; in this state, the gas supply elongated hole 16 of the attachment plate 31A is caused to correspond to the gas inlet 20 of the side airbag 11a while in a state of the gas inlet 20 corresponding to the gas supply hole 15 of the introduction pipe line 12, the fitting concave parts of the attachment plates 31A and 31B are fitted to the introduction pipe line 12; and by inserting four bolts B into the holes 22 of both the flanges F and holes 34 of the one base cloth 35, both the attachment plates 31A and 31B are fastened.

Similarly, the other side airbag 11b is also attached to the other side of the introduction pipe line 12. In such a manner, both the side airbags 11a and 11b are accommodated within the retainers (not shown) of the airbag attachment parts M of the introduction pipe line 12 in a folded state, respectively.

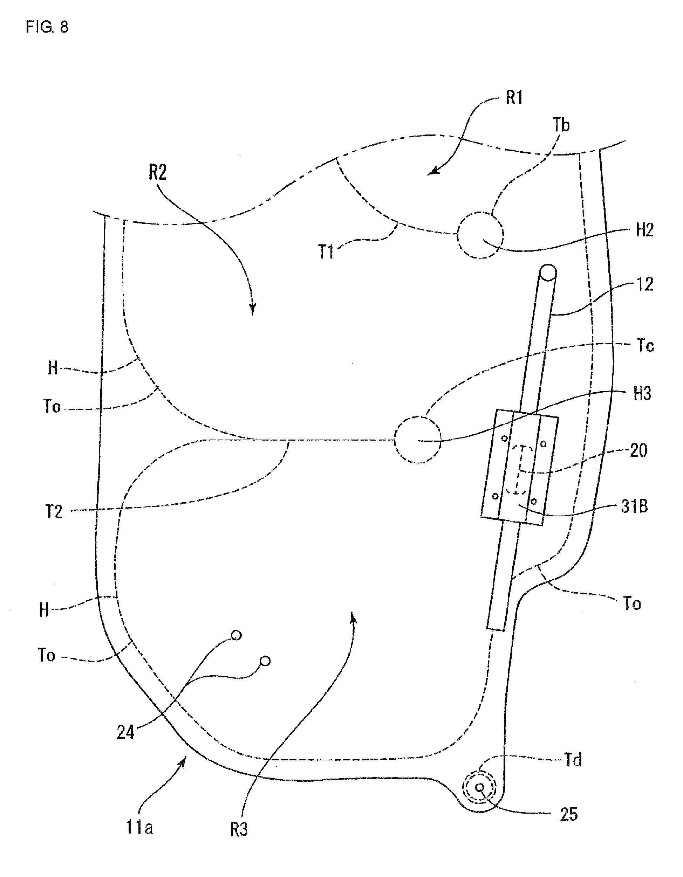

Fig. 7 is a plan view of the airbag 11 showing the fully-inflated and developed whole structure; and Fig. 8 is a partial enlarged plan view showing the attachment relationship to the introduction pipe line 12.

In Figs. 7 and 8, the one side airbag 11a is shown as the airbag 11. The side airbag 11a, as mentioned above, is formed of a bag made by stitching two base cloths 35 flatly overlapped with each other, and the inside of the bag is zoned as three expansion chambers by circularly stitching with a suture H.

At the periphery of the side airbag 11a, the inside of the side airbag 11a is hermetically sealed with an outside facing part To made by stitching a seal part having adhesives applied to face each other with the suture H so as to form the flexible expansion chamber. The upper right corner portion of the expansion chamber of the side airbag 11a is zoned by an upper facing part T1 as an upper expansion chamber R1. Both ends of the upper facing part T1 are connected to two circular facing parts Ta and Tb, which are two non-expansion parts H1 and H2, arranged at within a predetermined distance from the outside facing part To.

The inside of the side airbag 11a is vertically divided into a middle expansion chamber R2 and a lower expansion chamber R3 defined by the outside facing part To, in which its upper and lower portions on the left are connected together at its middle portion to extend rightward, and a middle facing part T2 connected to the outside facing part To. The right end of the middle facing part T2 is connected to a circular facing part Tc arranged at a position within a predetermined distance from the outside facing part To as a non-expansion part H3. The one-side (facing an occupant) base cloth 35 positioned between the circular facing part Tc and the outside facing part To on the right is provided with the longitudinally linear gas inlet 20 formed thereon. Four holes 34 are formed around this gas inlet 20 for fitting the attachment member 31.

The one-side (facing an occupant) base cloth 35 partially constituting the lower expansion chamber R3 is also provided with two vent holes formed for exhausting excessive gas. A non-developing region of the outside facing part To at the right lower edge of the side airbag 11a is provided with a hole 25 formed to penetrate both the base cloths. In the periphery of the hole 25, both the base cloths are stitched together with the suture H to form a circular facing part Td as the non-developing region.

The one (right) side airbag 11a attached to the airbag attachment part M of the introduction pipe line 12 is attached to the one (right) side plate 14A by inserting a bolt (not shown) into the hole 25 at lower end and a hole 28 at the lower end of the side plate 14A. Similarly, the other side airbag 11a is also attached to the left side plate 14B at the holes 25 and 28 at lower ends of both members.

Then, the operation of the airbag device 10 mounted in the backrest of the seat and configured as described above will be described.

In Figs. 4 and 5, on the occurrence of vehicle rolling or side-on collision due to an accident, at first, the initiator (not shown) of the inflator 13 is activated by the inflator control circuit (not shown) based on a detection signal from the sensors; when gas is supplied to the gas supply holes 15 from the inflator 13, the respective folded side airbags 11a and 11b accommodated within retainer bodies (not shown) start inflating; during the inflation, the surfaces of both the side airbags 11a and 11b reach the tear lines (cleavage parts) on the skin cloth 1D on both sides of the backrest 1B by a gas pressing force so as to press and cleave them.

During developing, the gas introduced into the side airbags 11a and 11b from the gas inlets 20 inflates the upper expansion chamber R1, the middle expansion chamber R2, and the lower expansion chamber R3 defined by the upper facing part T1 and the middle facing part T2 in both the side airbags 11a and 11b while the developing direction being controlled by the upper facing part T1 and the middle facing part T2; both the side airbags 11a and 11b bulge outside the backrest 1B through the opened tear lines so as to inflate and develop toward the sides of the head 2A and the chest 2B of the occupant 2, respectively.

The airbag device 10 according to the embodiment described above achieves the following advantages.

That is, in the airbag device 10 according to the embodiment, as described above, the device is configured such that the one inflator 13 commonly supplies gas to the pair of side airbags 11a and 11b. Thereby, in comparison with a configuration in that individual inflators are provided for the side airbags 11a and 11b, the installation space can be omitted for an additional inflator, so that the installation space for the airbag device 10 can be reduced by that space. As a result, the installation space can be easily ensured for the airbag device 10 and the degree of freedom in installation space can also be expanded.

According to the embodiment, the introduction pipe line 12 is formed in a substantially inverted U-shape, so that the pipe line can be routed by folding back the line, thereby expanding the degree of freedom in installation space of the introduction pipe line 12.

The present invention is not limited to the embodiment described above, so that various modifications can be made within the scope of the effect and sprit of the invention. The modifications will be described below.

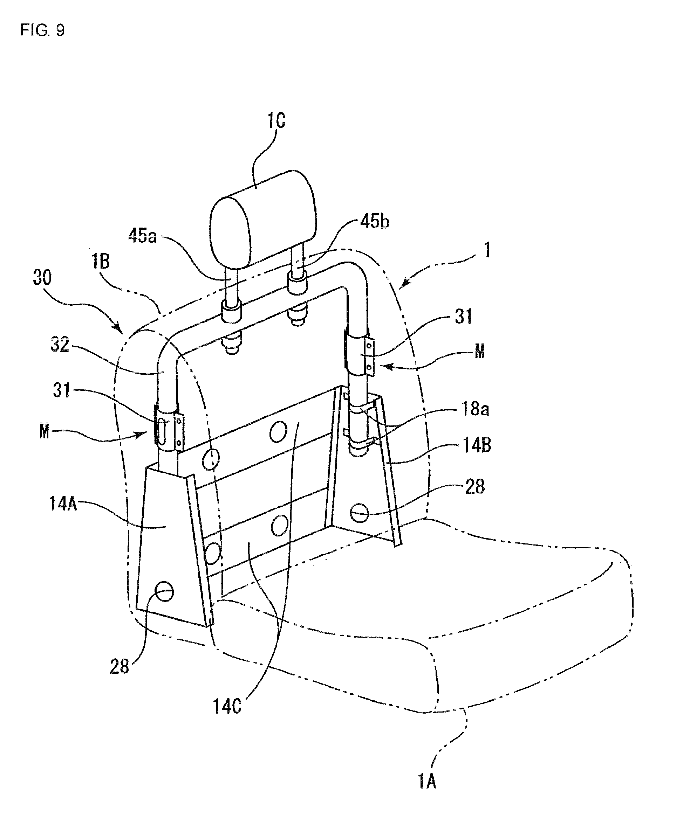

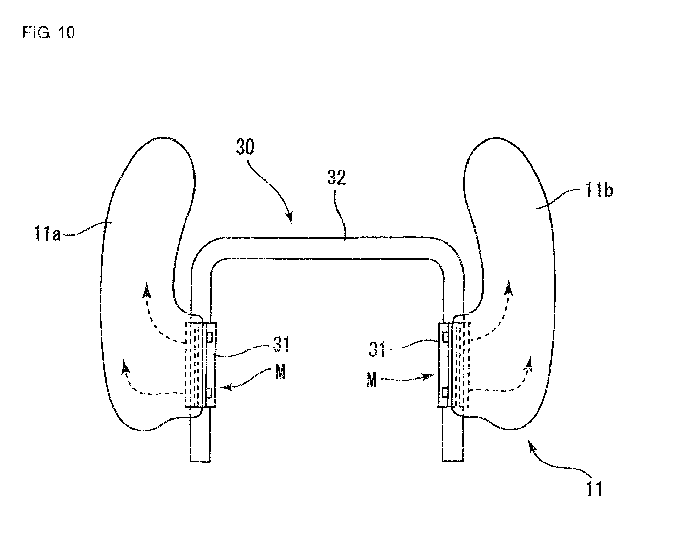

Fig. 9 is a perspective view of a seat mounted vehicle occupant restraint device modified from the airbag device according to the present invention; Fig. 10 is a front view of an airbag device with a pipe line type of inflator. Like reference characters designate like components common to the embodiment described above, and the description is omitted. In Fig. 9, the airbag is omitted for avoiding graphic complexity in the same way as in Fig. 1.

In Figs. 9 and 10, reference numeral 30 denotes an airbag device, and an introduction pipe line 32 of the airbag device 30 is formed by bending a metallic pipe in an inverted U-shape, for example, to form an inflator (a pipe line type of inflator) by itself. In addition, the function of the introduction pipe line 32 to also serve as a strength support member for supporting a load from the occupant 2 is the same as that of the introduction pipe line 12.

On both sides of the introduction pipe line 32 configured in a substantially inverted U-shaped structure, the airbag attachment parts M are arranged at a predetermined height position for attaching the side airbags 11a and 11b thereto, respectively. The airbag attachment parts M are provided with the gas supply holes 15 formed therein, respectively. The pressure gas from the inflator 13 is to be introduced from these gas supply holes 15 to the side airbags 11a and 11b via the gas inlets 20, respectively.

In the airbag device 30 of this modified example, on the occurrence of vehicle rolling or side-on collision due to an accident, for example, when the inflator within the introduction pipe line 32 is activated so as to supply gas to the gas supply holes 15, the folded side airbags 11a and 11b accommodated within the retainer bodies are inflated to push the tear lines (cleavage parts) on the skin cloth 1D to cleave them; and both the side airbags 11a and 11b bulge outside the backrest 1B through the opened tear lines to inflate and develop toward the sides of the chest 2A and the waist 2B of the occupant 2, respectively.

In the modification described above, in addition to have the same advantages as those of the embodiment described above, since the pipe line itself forms the inflator, it is not necessary to prepare the installation space for the inflator in addition to that for the introduction pipe line 32, further reducing the installation space. On the occurrence of vehicle rolling or side-on collision due to a collision, the pressure fluid can also be supplied simultaneously to both the airbags 11a and 11b.

In the modification, the introduction pipe line 32 as the pipe line type of inflator can also serve as the strength support member for supporting a load from the occupant, so that the introduction pipe line 32 (the pipe line type of inflator) can be used as both the inflator and the strength support member of the backrest. In comparison with a case where the strength support member is independently provided in addition to the introduction pipe line (the pipe line type of inflator), the installation space can be more easily ensured for the airbag device 10 within the backrest 1B of the seat 1 and the degree of freedom can be expanded as well.

In the embodiments described above, the side airbags developing toward the sides of the head and chest of an occupant have been incorporated in the present invention; however, the invention is not limited to this, so that the present invention can be applied to other restraint devices such as a roof airbag developing toward the upper part of the head of an occupant.

The specific configurations of the embodiments described above do not specify the contents of the present invention, so that details may be obviously modified in a broad range along with the sprit of the present invention.

## Claims

1. A seat mounted vehicle occupant restraint device comprising:
a seat backrest;
a plurality of airbags respectively provided at positions within the seat backrest such that during inflating, the airbags develop toward a substantial peripheral region of an occupant at least including the sides of the occupant; and
pressure fluid supplying means configured to commonly supply pressure fluid to the plurality of airbags.

2. The device according to Claim 1, wherein the pressure fluid supplying means includes one inflator and an introduction pipe line configured to introduce the pressure fluid from the inflator to the plurality of airbags.

3. The device according to Claim 2, wherein the introduction pipe line is configured in a substantially U-shape.

4. The device according to Claim 1, wherein the pressure fluid supplying means is a pipe line type of inflator configured to supply the pressure fluid to the plurality of airbags.

5. The device according to Claim 4, wherein the pipe line type of inflator is substantially U-shaped.

6. The device according to any one of Claims 1 to 5, wherein the introduction pipe line or the pipe line type of inflator constitutes at least part of a strength support member configured to support a load from an occupant.
